# EUROPEAN PATENT APPLICATION

(11) **EP 4 751 979 A1**
(43) Date of publication of application: **03.06.2026**
(21) Application number: 25219384.2
(22) Date of filing: 28.11.2025
(51) Int. Cl.: B60L 15/02, B60L 15/20, B60L 58/25

(54) **THERMAL CONDITIONING OF THE BATTERY PACK OF AN ELECTRIC VEHICLE**

(30) Priority: 29.11.2024 IT 202400027114
(71) Applicant: C.R.F. Società Consortile per Azioni, 10043 Orbassano (TO) (IT)
(72) Inventor: DI MARTINO, Antonino, 10043 ORBASSANO (TO) (IT); ALLOCCO, Alessandro, 10043 ORBASSANO (TO) (IT); BRUNO, Roberto, 10043 ORBASSANO (TO) (IT); NOVATI, Jean, 10043 ORBASSANO (TO) (IT); VALENCIA GARCIA, Diego Fernando, 10043 ORBASSANO (TO) (IT)
(74) Representative: Studio Torta S.p.A.

(57) **Abstract**

Control software storable and executable by an electronic processing unit **(20)** of an electric vehicle **(10),** said electric vehicle **(10)** including a battery pack **(8)** and an electric propulsion system **(2)** comprising a converter **(4),** an electric motor **(3)** coupled to the converter **(4)** and a propulsion control unit **(15)** configured to control the converter **(4)** and the electric motor **(3)** through a FOC control technique as a function of torque values and of motor revolution numbers. When the software is executed, the electronic processing unit **(20)** becomes configured to: drive **(50)** the propulsion control unit **(15)** on the basis of a first torque (**τ₁**) and of a real motor revolution number (**V_{REAL}**), in such a way that the electric motor **(3)** provides a torque equal to the first torque (**τ₁**) and turns at a revolution number equal to said real motor revolution number (**V_{REAL}**), in such a way that the electric propulsion system **(2)** has a first efficiency (**η₁**) which corresponds to a first power loss of the electric propulsion system **(2);** acquire thermal status signals **(TH)** indicative of an initial temperature (**Tᵢ**) of the battery pack **(8)** and of a set temperature (**T_{SET}**) to be reached by the battery pack (**8**), the set temperature (**T_{SET}**) being greater than the initial temperature (**Tᵢ**); determine **(30),** on the basis of the thermal status signals **(TH),** an additional power loss of the electric propulsion system **(2)** which brings the temperature of the battery pack **(8)** from the initial temperature (**Tᵢ**) to the set temperature (**T_{SET}**); store **(35)** at least one power loss map indicative of the power losses of the electric motor **(3)** and of the converter **(4)** as a function of the torque values and of the motor revolution numbers; determine **(24)** a virtual motor revolution number (**V_{VRT}**) such that the power loss indicated by the power loss map for the first torque (**τ₁**) and for said virtual motor revolution number (**V_{VRT}**) is equal to the sum of said first power loss and said additional power loss; and drive **(50)** the propulsion control unit **(15)** on the basis of the first torque (**τ₁**) and of the virtual motor revolution number (**V_{VRT}**), in such a way that the electric motor **(3)** provides a second torque (**τ₂**), substantially equal to the first torque (**τ₁**), and turns at a revolution number still equal, substantially, to the real motor revolution number (**V_{REAL}**), in such a way that the electric propulsion system **(2)** has a second efficiency (**η₂**), which is less than the first efficiency (**η₁**) and corresponds to the sum of the first power loss and of the additional power loss, thereby causing an increment of power losses of the electric propulsion system **(2)** and the consequent heating of the battery pack **(8).** Figure **6**

## Description

### CROSS-REFERENCE TO RELATED APPLICATIONS

This patent application claims priority from Italian patent application no. 102024000027114 filed on November 29, 2024, the entire disclosure of which is incorporated herein by reference.

### TECHNICAL FIELD OF THE INVENTION

The present invention relates to a temperature control function of the battery pack of an electric vehicle and to a related electronic control system; in particular, the present invention refers to an electronic system for efficiently controlling the temperature of the battery pack both in a stationary condition and a moving condition of the electric vehicle.

### STATE OF THE ART

As is known, some vehicles are equipped with electric propulsion systems, namely systems that include at least one electric motor for the traction of the respective vehicle. Such vehicles include so-called "electric" vehicles but also so-called "hybrid" vehicles (namely comprising a thermal engine and at least one electric motor). An electric motor is typically an alternating current-powered motor, with a three-phase architecture, and controlled, for example, by means of an FOC ("Field Oriented Control") vector control method. Such an electric motor can be, for example, a synchronous motor, a permanent magnet motor, an asynchronous motor, or an induction motor.

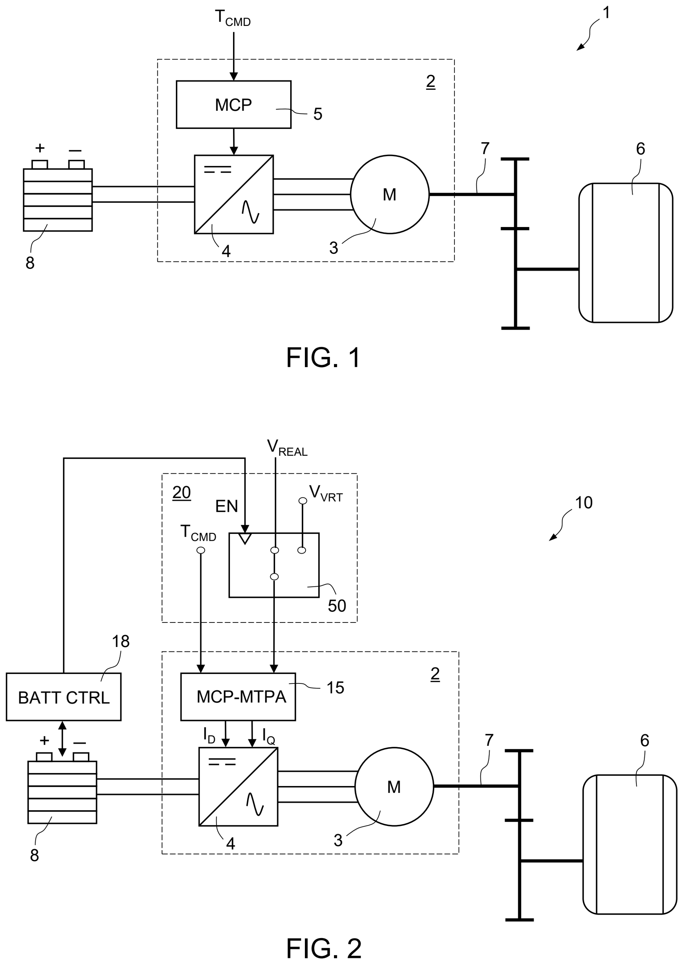

An electric vehicle **1** equipped with an electric propulsion system **2** is illustrated in Figure **1****.** The electric propulsion system **2** comprises an electric motor **3,** for example a synchronous motor, a converter **4** (or PIM, "Power Inverter Module"), and a control unit (MCP, "Motor Control Processor") **5** for controlling the electric motor **3** and the converter **4,** for example by means of a FOC control. The electric vehicle **1** comprises a plurality of wheels **6** and a transmission assembly **7** configured to connect the electric motor **3** to the wheels **6** so that the electric propulsion system **2** can deliver power to the wheels **6** via the transmission assembly **7.** In particular, the electric propulsion system **2** is powered by an electric power source **8** of the electric vehicle **1.** The electric power source **8** is typically a battery pack comprising, for example, lithium-ion battery arrays, such as those used in latest generation electric vehicles, and configured to store an amount of extractable electric charge in the form of direct current (DC). In particular, the converter (or DC-AC converter) **4** is configured to transform a direct current supplied by the electric power source **8** into a three-phase alternating current (AC) usable by the electric motor **3.** More in particular, the control unit **5,** based on a torque command **T_{CMD},** controls the converter **4** so that it supplies the electric motor **3** with alternating current values so that the desired power is delivered to the wheels **6.** The electric power source **8** is furthermore configured to be coupled to a battery charging system external to the electric vehicle **1,** for example a roadside charging station.

The operating temperature of the battery pack used for the electric power source **8** of Figure **1** is typically controlled in order to maximise its storable and extractable energy and, ultimately, in order to maximise the efficiency and performance of the electric vehicle. For example, lithium-ion batteries can be inefficient when they are at relatively low temperatures, a situation that can be typical when the electric vehicle is exposed, in a stationary condition (for example, when the electric vehicle is parked) and/or a moving condition, to particularly harsh climates. In such a situation, for example, in order to maximise the efficiency of a fast charging phase, the battery pack is specifically preheated so that it reaches a temperature greater than a threshold temperature. More generally, there is a need to maintain the temperature of the battery pack within a predetermined temperature range that maximises efficiency and performance.

To this end, commercially available solutions for electric power sources comprise a dedicated component, referred to as a heater ("electric battery heater"), coupled to the battery pack, and configured to generate and supply the required heat to the battery pack so that its temperature reaches the predetermined temperature range. However, dedicated components such as the heater may add complexity to the electric vehicle in terms of weight, bulk, and cost.

### OBJECT AND SUMMARY OF THE INVENTION

The object of the present invention is therefore to provide a solution that at least partially overcomes the limitations of the prior art. In detail, the object of the present invention is to provide a temperature control system for the battery pack of an electric vehicle, and in particular a battery pack temperature control system that can be integrated with the control system of the electric motor powered by said battery pack and that limits the use and/or size of the battery heater or that does not use it at all.

According to the present invention, a motor vehicle control software is provided as claimed in the appended claims.

### BRIEF DESCRIPTION OF THE DRAWINGS

For a better understanding of the present invention, preferred embodiments are now described, by way of non-limiting example only, with reference to the annexed drawings, in which:
- Figure **1** shows a simplified block diagram of an electric vehicle according to the prior art;
- Figure **2** shows a simplified block diagram of an electric vehicle implementing a temperature control function of a battery pack according to the present invention;
- Figure **3** shows a simplified graph relating to the operation of the electric vehicle of Figure **2****;**
- Figure **4** shows a simplified block diagram of an exemplary embodiment of a detail of the electric vehicle of Figure **2****;**
- Figure **5** shows a simplified block diagram relating to an embodiment of the battery pack temperature control function of the electric vehicle of Figure **2****;**
- Figure **6** shows a simplified block diagram relating to a different embodiment of the battery pack temperature control function of the electric vehicle of Figure **2****;** and
- Figure **7** shows a simplified graph relating to the operation of the electric vehicle of Figure **2** according to the embodiment of Figure **6****.**

### DESCRIPTION OF PREFERRED EMBODIMENTS OF THE INVENTION

The present invention will now be described in detail with reference to the annexed Figures to allow a person skilled in the art to implement and use it. Various modifications to the described embodiments will be immediately apparent to those skilled in the art and the general principles described can be applied to other embodiments and applications without departing from the protective scope of the present invention, as defined in the appended claims.

Unless otherwise defined, all technical and scientific terms used herein have the same meaning commonly used by persons of ordinary skill in the art to which this invention pertains. Furthermore, the block diagrams included in the annexed Figures and described below are not to be understood as representing structural features, i.e. constructive limitations, but must be interpreted as representations of functional features, i.e. functions that can be implemented in different ways.

With reference to Figure **2****,** an electric vehicle **10** comprises an electronic processing unit **20** in which a motor vehicle control software is stored and executed such that the electronic processing unit **20** implements a temperature control function of a battery pack of the electric vehicle **10** as described below. In particular, except where otherwise specified, the electric vehicle **10** is described below with reference to the differences compared to the electric vehicle **1** shown in Figure **1****.** Elements of the electric vehicle **10** already present in the electric vehicle **1** of Figure **1** are indicated by the same reference numerals. Furthermore, it is understood that what is described below can also be applied to a hybrid vehicle, i.e. a vehicle that comprises a thermal propulsion system and an electric propulsion system such as that shown in Figure **1****.**

In detail, the electronic processing unit **20** is configured to provide a propulsion control unit **15** of the electric propulsion system **2** with a torque command **T_{CMD}** so that the electric motor **3** is driven in order to deliver to the wheels **6** the desired torque (or power). More in detail, the torque command **T_{CMD}** is generated internally within the electronic processing unit **20,** based on a request from the driver of the electric vehicle **10,** and is indicative of a torque (expressed for example in [Nm]) that the electric motor **3** must deliver. The electronic processing unit **20** is furthermore configured to provide the propulsion control unit **15** with a signal indicative of a real motor revolution number (or also called "speed") **V_{REAL}** (expressed for example in [rpm]) of the electric motor **3,** namely the revolution number at which the electric motor **3** is actually rotating at a given operating instant of the electric vehicle **10.** The real motor revolution number **V_{REAL}** of the electric motor **3** is a monitoring signal of the electric propulsion system **2** with respect to the driving of the electric motor **3** based on the torque command **T_{CMD}.** The real motor revolution number **V_{REAL}** is for example data available in the electric vehicle **10** during its operation, for example it can be measured by means of dedicated transducers and transmitted by means of a CAN protocol.

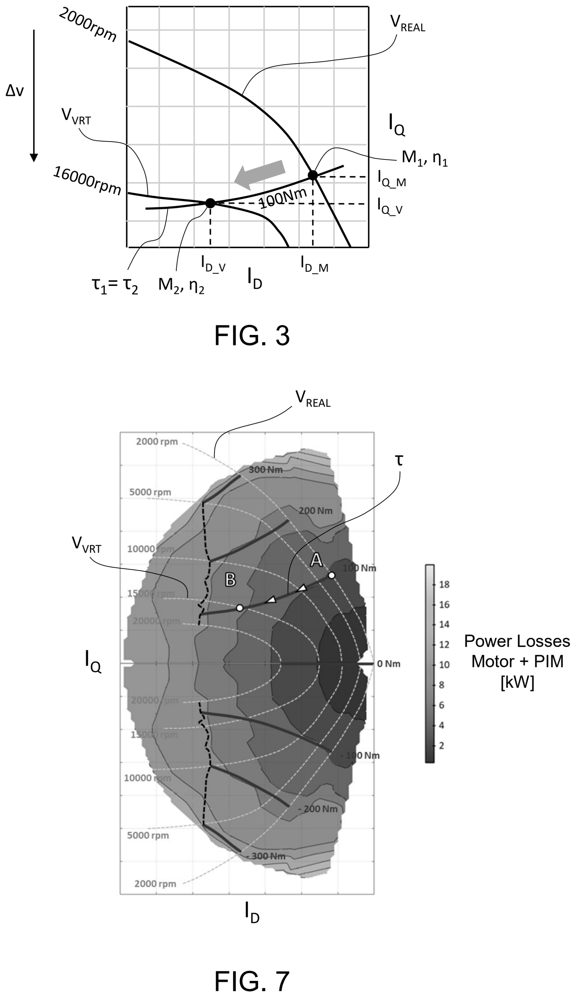

The propulsion control unit **15** of the electric propulsion system **2** is configured to control the converter **4** so that it supplies the electric motor **3** with alternating current values so that torque is delivered to the wheels **6** based on the torque command **T_{CMD}.** In detail, with reference also to Figure **3****,** the propulsion control unit **15** of the electric vehicle **10** implements a FOC control of the electric motor **3** employing the so-called MTPA (Maximum Torque Per Ampere) maps, which, in a known manner, allow to identify, based on the torque command **T_{CMD}** and the real motor revolution number **V_{REAL},** an operating point of the electric propulsion system **2** (or, equivalently, of the electric motor **3**) having the maximum possible efficiency. At the maximum efficiency operating point, the electric motor **3** is able to deliver the maximum torque per electric current supplied to it, minimising power losses for the amount of torque generated. More specifically, MTPA maps (one shown in Figure **3**) allow the operating points of electric motor **3** to be represented in a coordinate plane (I_{D}, I_{Q}), where **I_{D}, I_{Q}** are values of the respective drive current signals associated, in a manner known per se, with three-phase current values (or, equivalently, PWM voltage values) supplied by the converter **4** to the electric motor **3.** The MTPA maps comprise iso-torque curves and iso-speed curves: for a given torque **τ,** based on the torque command **T_{CMD},** an operating point having maximum efficiency is identified as a coordinate (I_{D_M}, I_{Q_M}) derived from the intersection between the corresponding iso-torque curve and an iso-speed curve corresponding to the real motor revolution number **V_{REAL}** of the electric motor **3** at the given operating instant. In Figure **3****,** for example, an iso-torque curve corresponding to a torque of 100Nm and an iso-speed curve corresponding to a revolution number of 2000rpm are shown. The MTPA maps are typical for each electric vehicle that mounts its own electric propulsion system and are obtained, in a known manner, during a calibration phase of the electric propulsion system.

The electric vehicle **10** comprises furthermore a battery control unit **18** for the electric power source **8** (hereinafter also simply battery pack **8**), configured to manage the charging and power delivery phases and to thermally monitor the battery pack **8.** In particular, the battery control unit **18,** based on target and calibration data of the battery pack **8,** stores in memory operating temperature ranges within which the battery pack **8** is able to maximise its charging and/or power delivery efficiency, depending on the state of charge (SoC). Still more in particular, the battery control unit **18** is coupled to the electronic processing unit **20** and is configured to generate an enabling signal **EN** when the temperature of the battery pack **8** is outside a predetermined operating temperature range. In practice, the battery control unit **18** measures a current temperature **T_{ACT}** of the battery pack **8** and verifies whether the current temperature **T_{ACT}** is greater than a predetermined minimum or threshold temperature; if the current temperature **T_{ACT}** is lower than the threshold temperature, the battery control unit **18** calculates a set temperature **T_{SET}** to which the battery pack **8** must be brought to maximise its efficiency and simultaneously sends to the electronic processing unit **20** the enabling signal **EN,** as explained in more detail below. For example, the set temperature **T_{SET}** can be greater than or equal to a minimum temperature of an operating temperature range within which the battery pack **8** maximises its efficiency. The current temperature **T_{ACT}** can be detected and measured by the battery control unit **18** for example by means of dedicated thermal transducers.

The electronic processing unit **20** of the electric vehicle **10** implements in detail a selector **50,** configured to provide the propulsion control unit **15** alternatively the signal indicative of the real motor revolution number **V_{REAL}** of the electric motor **3** or a signal indicative of a virtual motor revolution number **V_{VRT}** (as detailed below) of the electric motor **3,** based on the enabling signal **EN.** In particular, the enabling signal **EN** is indicative of an enabling request of a temperature control function of the battery pack **8** of the electric vehicle **10.** More in particular, when the enabling signal **EN** is in a low state, the selector **50** is disabled and the propulsion control unit **15** receives as input the real motor revolution number **V_{REAL};** when instead the enabling signal **EN** is in a high state, the selector **50** is enabled and the propulsion control unit **15** receives as input the virtual motor revolution number **V_{VRT}.**

When the selector **50** is disabled, the propulsion control unit **15** operates as described above, calculating, by means of MTPA maps, an operating point **I_{D_M}, I_{Q_M}** of the electric motor **3** that maximises the efficiency, namely that minimises the power losses, of the electric propulsion system **2.** With reference to Figure **3****,** a first engine condition **M₁** can therefore be identified, determined by a first torque **τ₁,** by a real motor revolution number **V_{REAL}** and therefore by first driving current signals **I_{D_M}, I_{Q_M}** calculated in order to obtain a first efficiency **η₁** corresponding to the maximum obtainable one. Such a condition is for example the one normally implemented by an electric vehicle of the prior art that uses an FOC control. Such an electric vehicle of the prior art also employs, for example, the dissipated energy during braking to charge the battery pack (so-called "regenerative braking"), if the state of charge of the battery pack allows it, namely if it is not already close to a maximum charge level.

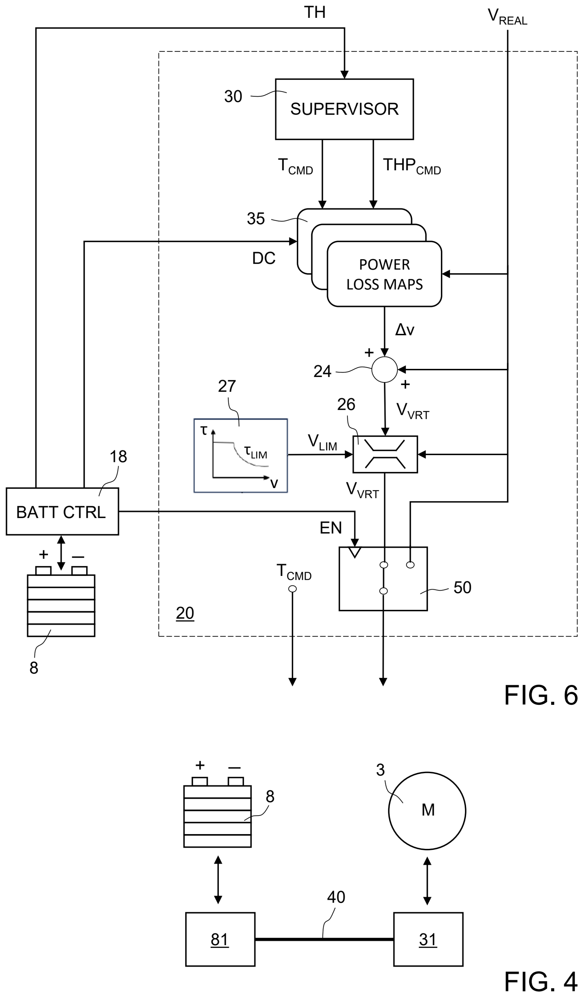

When selector **50** is enabled, i.e. when the temperature control function of the battery pack **8** is required, the electronic processing unit **20** forces the electric propulsion system **2,** and in particular the converter **4** and the electric motor **3,** to operate at a lower efficiency than the maximum achievable efficiency for the same torque value. This lower efficiency condition leads to increased power loss in the electric propulsion system **2** and therefore to the generation of excess heat that can be usefully employed to control the temperature of the battery pack **8,** in particular to heat it. In practice, in electric vehicle **10,** the enable signal **EN** is set to a high state when battery pack **8** needs to be heated, starting from an initial temperature **Tᵢ** at which battery pack **8** is, for example, when electric propulsion system **2** is in the first motor condition **M₁,** up to a set temperature **T_{SET},** which is higher than the initial temperature **Tᵢ,** in order to maximise the operating efficiency of the battery pack **8.** In a non-limiting embodiment, such as that shown for example in Figure **4****,** the excess heat can be directed to the battery pack **8** by using a hydraulic connection **40** configured to connect a motor cooling hydraulic circuit **31,** thermally coupled to the electric motor **3,** to a battery cooling hydraulic circuit **81,** thermally coupled to the battery pack **8.** Alternatively, or in addition, the excess heat can be directed towards the battery pack **8** by using, for example, a suitable mutual arrangement, in the electric vehicle **10,** of the electric motor **3** and of the battery pack **8.**

In detail, the selector **50** provides the propulsion control unit **15** with the virtual motor revolution number **V_{VRT}** so that the latter calculates, by means of the MTPA maps, a different operating point **I_{D_V}, I_{Q_V}** of the electric motor **3** on the same iso-torque curve. More in detail, referring to Figure **3****,** when the selector **50** is enabled, starting from a previous engine condition and coinciding, for example, with the first engine condition **M₁,** the propulsion control unit **15** shifts the operating point to a second engine condition **M₂** determined by a second torque **τ₂,** by a virtual motor revolution number **V_{VRT}** and therefore by second driving current signals **I_{D_V}, I_{Q_V}** calculated in order to obtain a second efficiency **η₂**. The second torque **τ₂** coincides with the first torque **τ₁,** the virtual motor revolution number **V_{VRT}** is greater than the real motor revolution number **V_{REAL}** and the second efficiency **η₂** is lower than the first efficiency **η₁.** In practice, therefore, when the selector **50** is enabled, the electric motor **3** is driven so that it substantially generates the same torque as an engine condition in which the selector **50** is disabled, but with greater power losses. In this way, in the electric vehicle **10,** the revolution number at which the electric motor **3** actually rotates remains unchanged following the enabling of temperature control function of the battery pack **8;** for this reason, the revolution number in the second engine condition **M₂** is defined as "virtual". Furthermore, the operating point **I_{D_V}, I_{Q_V}** is the operating point that would maximise the efficiency of the electric propulsion system **2** if the electric motor **3** were to rotate at a revolution number equal to the virtual motor revolution number **V_{VRT}.** In other words, when the selector **50** is enabled, the propulsion control unit **15** shifts the operating point of the electric motor **3** to a different iso-speed curve, remaining on the same iso-torque curve.

A difference (or, correction) in revolution number **Δv** exists between the virtual motor revolution number **V_{VRT}** and the real motor revolution number **V_{REAL}** when the enabling signal **EN** is set to a high state. In particular, the difference in motor revolution number **Δv** is positive and is indicative of the excess heat to be generated in order to bring the battery pack **8** from the initial temperature **Tᵢ** to the set temperature **T_{SET}.** Correspondingly, the second efficiency **η₂** is indicative of an engine condition in which there is an increased power loss. In the example of Figure **3****,** the electric propulsion system **2** is brought, along the same iso-torque curve characterized by a first torque value **τ₁** (coinciding with the value of second torque **τ₂**) equal to 100Nm, from a first engine condition **M₁** having a real motor revolution number **V_{REAL}** equal to 2000rpm to a second engine condition **M₂** having a virtual motor revolution number **V_{VRT}** equal to 16000rpm, generating for example an increased power loss of the electric propulsion system **2** equal to 4kW.

The temperature control function of the battery pack **8** can be effectively employed both when the electric propulsion system **2** generates a torque (positive - in traction - or negative - in electric braking) other than zero, namely when the electric vehicle **10** is in motion, or when the torque required by the driver is zero, for example, in a parked electric vehicle condition. For example, there is a request to heat the battery pack **8** when the electric vehicle **10** is parked in relatively cold environmental conditions, so as to maintain the temperature of the battery pack **8** above a minimum threshold temperature; or, the battery pack **8** can be preheated, during driving, to a predetermined temperature range so as to prepare it for fast charging, namely to start fast charging at a temperature that optimises its efficiency from the outset. Furthermore, in a condition where the SoC of the battery pack **8** is already relatively high, the excess power generated by the electric motor **3,** which could not be employed to charge the battery pack **8,** can instead be employed to heat it. More generally, in a typical case of use of the electric vehicle **10** in which the battery pack **8** is cold, by enabling the temperature control function of the battery pack **8** it is possible to adjust the operating point of the electric motor **3** so as to maximise the effectiveness of both charging and heating of the battery pack **8.**

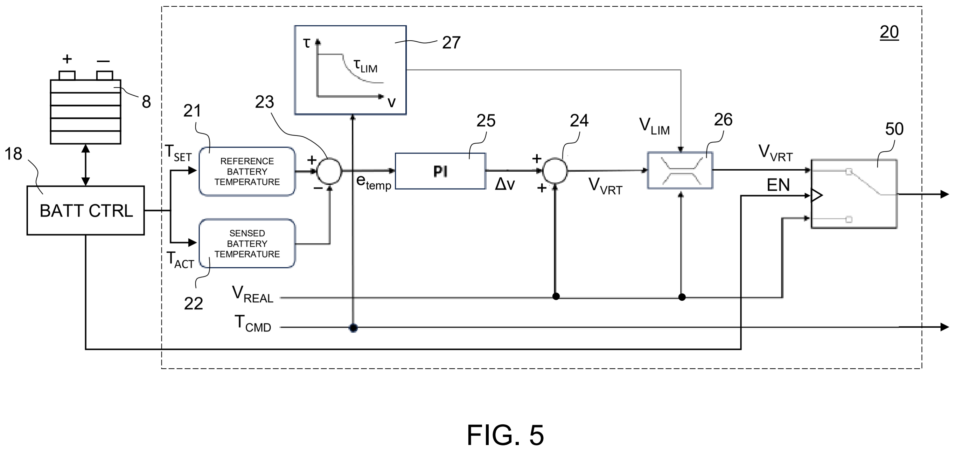

The motor revolution number correction **Δv** is calculated, in order to generate the desired temperature difference of the battery pack **8,** according to the embodiments of the electronic processing unit described below and shown respectively in Figures **4** and **5****.**

In detail, with reference to Figure **5****,** in a first embodiment the revolution number correction **Δv** is calculated starting from a closed-loop control of the temperature of the battery pack **8.** The electronic processing unit **20** implements in particular a regulator **25** configured to provide as output the revolution number correction **Δv** starting from a temperature error **eₜₑₘₚ;** for example, the regulator **25** is a proportional-integrative (PI) regulator.

More in detail, the electronic processing unit **20** comprises a first memory block **21,** configured to store a signal indicative of the set temperature **T_{SET}** of the battery pack **8,** and a second memory block **22,** configured to store a signal indicative of the current temperature **T_{ACT}** of the battery pack **8.** The set temperature **T_{SET}** and the current temperature **T_{ACT}** of the battery pack **8** are both received from the battery control unit **18.** The electronic processing unit **20** compares the current temperature **T_{ACT}** with the set temperature **T_{SET}** by means of a comparator block **23,** configured to generate a signal indicative of the temperature error **eₜₑₘₚ.** The signal indicative of the revolution number correction **Δv** is then generated by the regulator **25,** in particular as a signal proportional to the temperature error **eₜₑₘₚ** and, ultimately, to the heat to be generated in order to bring the battery pack **8** from the current temperature **T_{ACT}** to the set temperature **T_{SET}.**

The revolution number correction **Δv** is subsequently added to the real motor revolution number **V_{REAL}** by means of an adder block **24,** obtaining a signal indicative of the virtual motor revolution number **V_{VRT}.** The virtual motor revolution number **V_{VRT}** thus obtained is then provided to a limiter block **26,** configured to limit the virtual motor revolution number **V_{VRT}** between a lower saturation value equal to the real motor revolution number **V_{REAL}** and an upper saturation value equal to a limit motor revolution number **V_{LIM}.** The limit motor revolution number **V_{LIM}** is obtained starting from a saturator block **27** as the maximum limit obtainable as a function of the torque delivered by the electric motor **3;** more precisely, the saturator block **27** stores in memory values of a characteristic curve of the maximum deliverable torque as a function of the revolution number by the electric motor **3.** The saturation operated by the limiter block **26** allows to ensure that, when the temperature control function of the battery pack **8** is enabled, the electric motor 3 continues to deliver the requested torque (for example, in Figure **3****,** the first torque **τ₁).**

The virtual motor revolution number **V_{VRT}** is then supplied to selector **50** of electronic processing unit **20,** which in turn supplies it to the propulsion control unit **15** of the electric propulsion system **2** to shift the operating point of electric motor **3** towards engine conditions with increased power losses, as described above. In particular, the regulator **25** of the electronic processing unit **20** cyclically calculates a motor revolution number correction **Δv,** based on successive measurements of the current temperature **T_{ACT}** of the battery pack **8,** until the temperature error **eₜₑₘₚ** is minimised. The current temperature **T_{ACT},** therefore, is a temperature between the aforementioned initial temperature **Tᵢ** at which the battery pack **8** is when the electric propulsion system **2** is in the first motor condition **M₁** and the set temperature **T_{SET}** to be reached. Correspondingly, the motor revolution number correction **Δv** decreases in value as the current temperature **T_{ACT}** approaches the set temperature **T_{SET},** the virtual motor speed **V_{VRT}** thus approaching the real motor revolution number **V_{REAL};** when the set temperature **T_{SET}** is reached (within, for example, a predetermined tolerance range), the enable signal **EN** is set to the low state and the selector **50** is disabled.

In particular, in the closed-loop control of the electronic processing unit **20** of Figure **3****,** the power loss generated by an engine condition with lower efficiency compared to the maximum obtainable one is not a state variable of the control: the regulator **25** of Figure 3 operates, in fact, directly on the temperature of the battery pack **8** and independently of the MTPA maps of the propulsion control unit **15.** For this reason, the architecture of the electronic processing unit **20** of Figure **3** can be advantageously implemented in any type of electric propulsion system with FOC control by means of a simple calibration of the PI regulator.

With reference to Figure **6****,** in a second embodiment the electronic processing unit **20** comprises a supervisor block **30** and a power loss memory block **35,** and the revolution number correction **Δv** is calculated using the power loss memory block **35** starting from a thermal power command **THP_{CMD}** generated by the supervisor block **30.** Elements of the electronic processing unit **20** of Figure **6** already present in the electronic processing unit **20** of Figure **5** are indicated by the same reference numerals.

In detail, the power loss memory block **35** stores in memory power loss maps characteristic of the electric propulsion system **2,** and in particular of the electric motor **3** and of the converter **4.** More in detail, the power loss maps are calibrated for the specific electric propulsion system **2** based on values of the voltage **DC** deliverable by the battery pack **8,** on values of the torque **τ** deliverable by the electric motor **3** (corresponding to respective torque commands **T_{CMD}**) and on the values of revolution number at which the electric motor **3** can rotate. Still more in detail, each power loss map refers to a respective value of the voltage **DC,** indicative in turn, for example, of the SoC of the battery pack **8.** The power loss maps are multidimensional maps and are indicative of the combination of power losses, or equivalently of efficiency, of the electric motor **3** and of the converter **4** for each operating point in a coordinate plane (I_{D}, I_{Q}).

In Figure **7** a power loss map superimposed, in shades of grey, on MTPA maps comprising iso-speed curves and iso-torque curves is shown. As can be noted, the power loss maps add a further state to the control of the electric propulsion system **2,** labelling each operating point (or equivalently, engine condition) with a power loss value and therefore, in fact, with excess heat to be employed for heating the battery pack **8.** In the plane of Figure **7** dark-coloured dashed lines corresponding to maximum obtainable power losses for respective given torque values **τ** are also shown. In Figure **7****,** for example, the forcing of the electric propulsion system **2** from an operating point **A** to an operating point **B** with increased power loss on the same iso-torque curve, corresponding, for example, to an increase in power loss equal to 4kW, is shown. The power loss maps are typically created and stored in the electronic processing unit **20** in a factory calibration phase of the electric propulsion system **2** and are obtainable, as shown in Figure **7****,** both for positive and negative torque values **τ.**

The supervisor block **30,** when the temperature control function of the battery pack **8** is activated, is configured to receive from the battery control unit **18** thermal status signals **TH** indicative of: the current temperature **T_{ACT}** (or initial temperature **Tᵢ**) of the battery pack **8;** the set temperature **T_{SET}** to which the battery pack **8** must be brought; and thermal quantities typical of the electric vehicle **10** and/or boundary thermal conditions, such as, for example, the thermal layout of the electric vehicle **10,** the ambient conditions external to the electric vehicle **10,** and the thermal exchange efficiency of the electric propulsion system **2.** The supervisor block **30** then, based on the thermal status signals **TH,** calculates the thermal power command **THP_{CMD},** the latter being indicative of a thermal power necessary to bring the temperature of the battery pack **8** from the current temperature **T_{ACT}** to the set temperature **T_{SET}.**

The power loss memory block **35** receives the thermal power command **THP_{CMD}** thus calculated and, starting from the torque command **T_{CMD}** currently supplied to the propulsion control unit **15** and from the real motor revolution number **V_{REAL}** (namely from the operating point of the electric motor **3** having the maximum possible efficiency) and starting from the voltage **DC** currently delivered by the battery pack **8,** identifies, based on the power loss maps, the power loss equal to the necessary thermal power. Since the power loss maps are correlated to the MTPA maps, the identified power loss (namely, an additional power loss) is translated into a corresponding revolution number correction **Δv,** on the same iso-torque curve.

The revolution number correction **Δv** is subsequently added to the real motor revolution number **V_{REAL}** by means of the adder block **24,** obtaining a signal indicative of the virtual motor revolution number **V_{VRT}.** The virtual motor revolution number **V_{VRT}** thus obtained is then provided to the limiter block **26,** configured to limit the virtual motor revolution number **V_{VRT}** between a lower saturation value equal to the real motor revolution number **V_{REAL}** and an upper saturation value equal to a limit motor revolution number **V_{LIM}.** The limit motor revolution number **V_{LIM}** is obtained starting from the saturator block **27** as the maximum limit obtainable as a function of the torque delivered by the electric motor **3.** The saturation operated by the limiter block **26** allows to ensure that, when the temperature control function of the battery pack **8** is enabled, the electric motor **3** continues to deliver the requested torque (for example, in Figure **3****,** the first torque **τ₁,** or the torque of the operating point **A** of Figure **7**).

The virtual motor revolution number **V_{VRT}** is then supplied to the selector **50** of the electronic processing unit **20,** which in turn supplies it to the propulsion control unit **15** of the electric propulsion system **2** for the shifting of the operating point of the electric motor **3** to an operating point characterized by the power loss identified by means of the thermal power command **THP_{CMD}.** For example, in Figure **7****,** the transition of the electric propulsion system **2** from the operating point **A** to the operating point **B** corresponds to a revolution number correction **Δv** equal to 15000rpm.

In the electronic processing unit **20** of Figure **6****,** the revolution number correction **Δv** is calculated directly from the thermal power request, which is translated, by means of power loss maps, into a corresponding power loss. Consequently, the temperature control function of the battery pack **8** implemented by the electronic processing unit **20** of Figure **6****,** given a factory calibration, proves to be extremely reactive and effective for the specific electric propulsion system **2.**

Based on what has been described above, the advantages that the present invention allows to achieve are evident. In particular, the described electronic processing unit **20** allows the electric vehicle **10** to achieve significantly improved battery pack charging performance and torque delivery performance. Specifically, by employing the additional heat generated in engine conditions to which the electric propulsion system is brought, it is possible not only to charge the battery pack more effectively but also to bring it to thermal conditions that generally improve its performance efficiency. Furthermore, the electronic processing unit **20** in the two described embodiments proves to be easily implementable on different motor vehicle platforms.

Finally, it is clear that modifications and variations may be made to what has been described and illustrated herein without thereby departing from the scope of the present invention, as defined in the appended claims.

Regarding the temperature control of the battery pack of the electric vehicle, it is underlined that what matters are the operations that must be implemented to implement such functionality and not the hardware and software architectures with which such operations are implemented, to the point that these could be implemented via a concentrated architecture, namely by a single electronic processing device, or via a cooperative distributed architecture, namely distributed among different electronic devices in communication and cooperating with each other according to a proprietary logical architecture that the manufacturer of the motor vehicle platform will decide to adopt. For example, the functions implemented by the battery control unit can be implemented in a more centralised manner by the electronic processing unit. Alternatively, centralized functions such as those of the selector can be implemented directly by the propulsion control unit.

## Claims

1. Control software storable and executable by an electronic processing unit (**20**) of an electric vehicle (**10**), said electric vehicle (**10**) including a battery pack (**8**) and an electric propulsion system (**2**) comprising a converter (**4**), an electric motor (**3**) coupled to the converter (**4**) and a propulsion control unit (**15**) configured to control the converter (**4**) and the electric motor (**3**) through a FOC, "Field-Oriented Control", control technique as a function of torque values and of motor revolution numbers,
the control software being configured in such a way that, when the software is executed by the electronic processing unit (**20**), the electronic processing unit (**20**) becomes configured to:
- drive (**50**) the propulsion control unit (**15**) on the basis of a first torque **(τ₁)** and of a real motor revolution number (**V_{REAL}**), in such a way that the electric motor (**3**) provides a torque equal to the first torque (**τ₁**) and turns at a revolution number equal to said real motor revolution number (**V_{REAL}**), in such a way that the electric propulsion system (**2**) has a first efficiency (**η₁**) which corresponds to a first power loss of the electric propulsion system (**2**);
- acquire thermal status signals (**TH**) indicative of an initial temperature (**Tᵢ**) of the battery pack (**8**) and of a set temperature (**T_{SET}**) to be reached by the battery pack (**8**), the set temperature (**T_{SET}**) being greater than the initial temperature (**Tᵢ**);
- determine (**30**), on the basis of the thermal status signals (**TH**), an additional power loss of the electric propulsion system (**2**) which brings the temperature of the battery pack (**8**) from the initial temperature (**Tᵢ**) to the set temperature (**T_{SET}**);
- store (**35**) at least one power loss map indicative of the power losses of the electric motor (**3**) and of the converter (**4**) as a function of the torque values and of the motor revolution numbers;
- determine (**24**) a virtual motor revolution number (**V_{VRT}**) such that the power loss indicated by the power loss map for the first torque (**τ₁**) and for said virtual motor revolution number (**V_{VRT}**) is equal to the sum of said first power loss and said additional power loss; and
- drive (**50**) the propulsion control unit (**15**) on the basis of the first torque (**τ₁**) and of the virtual motor revolution number (**V_{VRT}**), in such a way that the electric motor (**3**) provides a second torque (**τ₂**), substantially equal to the first torque (**τ₁**), and turns at a revolution number still equal, substantially, to the real motor revolution number (**V_{REAL}**), in such a way that the electric propulsion system (**2**) has a second efficiency (**η₂**), which is less than the first efficiency (**η₁**) and corresponds to the sum of the first power loss and of the additional power loss, thereby causing an increment of power losses of the electric propulsion system (**2**) and the consequent heating of the battery pack (**8**).

2. Control software according to claim 1, wherein the power loss map is calibrated on the basis of a corresponding voltage value providable by the battery pack (**8**), of torque values providable by the electric motor (**3**) and of motor revolution numbers admissible for the electric motor (**3**), the power loss map being obtained from a factory calibration phase of the electric propulsion system (**2**).

3. Control software according to claim 1 or 2, wherein the virtual motor revolution number (**V_{VRT}**) is greater than the real motor revolution number (**V_{REAL}**) of the electric motor (**3**).

4. Control software according to any one of the preceding claims, wherein determine (**24**) the virtual motor revolution number (**V_{VRT}**) comprises limiting (**26**) the virtual motor revolution number (**V_{VRT}**) between a lower saturation value equal to the real motor revolution number (**V_{REAL}**) and an upper saturation value equal to a limit motor revolution number (**V_{LIM}**) obtained from a curve stored in the electronic processing unit (**20**) and indicative of the torque limit providable by the electric motor (**3**) as a function of the motor revolution number.

5. Control software according to any one of the preceding claims, wherein the first efficiency (**η₁**) is the maximum efficiency of the electric propulsion system (**2**), when the electric motor (**3**) provides the first torque (**τ₁**) and turns at the real motor revolution number (**V_{REAL}**), and wherein the second efficiency (**η₂**) is the maximum efficiency of the electric propulsion system (**2**), when the electric motor (**3**) provides the first torque (**τ₁**) and turns at the virtual motor revolution number (**V_{VRT}**).

6. Computer-readable medium having stored thereon the control software according to any one of claims from 1 to 5.

7. Electronic processing unit (**20**) for an electric vehicle (**10**) in which the control software according to any one of claims from 1 to 5 is stored, the electronic processing unit (**20**) being further configured to be enabled by a battery control unit (**18**) of the electric vehicle (**10**),
and wherein the electronic processing unit (**20**) is further configured to:
- when disabled by the battery control unit (**18**), drive (**50**) the propulsion control unit (**15**) based on the first torque (**τ₁**) and of the real motor revolution number (**V_{REAL}**);
- when enabled by the battery control unit (**18**), drive (**50**) the propulsion control unit (**15**) based on the first torque (**τ₁**) and of the virtual motor revolution number (**V_{VRT}**), so that the temperature of the battery pack (**8**) reaches the set temperature (**T_{SET}**).

8. Electric vehicle (**10**) comprising an electronic processing unit (**20**) according to claim 7, wherein the propulsion control unit (**15**) is configured to drive the converter (**4**) and the electric motor (**3**) based on MTPA, "Maximum Torque Per Ampere", maps.

9. Electric vehicle (**10**) according to the preceding claim, further comprising: a motor hydraulic cooling circuit (**31**), thermically coupled to the electric motor (**3**); a battery hydraulic cooling circuit (**81**), thermically coupled to the battery pack (**8**); and a hydraulic connection (**40**), configured to connect the motor hydraulic cooling circuit (**31**) and the battery hydraulic cooling circuit (**81**).
